# EUROPÄISCHE PATENTSCHRIFT

(11) **EP 0 432 484 B1**
(45) Veröffentlichungstag und Bekanntmachung des Hinweises auf die Patenterteilung: **09.03.1994**
(21) Anmeldenummer: 90121704.2
(22) Anmeldetag: 13.11.1990
(51) Int. Cl.: F16B 35/04, F16B 25/00, E04G 23/02, E04B 1/16, E04B 5/23

(54) **Verbundelement**
Fastening element
Elément de connexion

(30) Priorität: 16.11.1989 AT 2627/89; 13.09.1990 DE 4029134
(43) Veröffentlichungstag der Anmeldung: 19.06.1991
(60) Teilanmeldung: 92119515.2
(73) Patentinhaber: SFS Handels Holding AG, CH-9435 Heerbrugg (CH)
(72) Erfinder: Spirig, Rudolf, CH-9443 Wildnau (CH)
(74) Vertreter: Ludescher, Hans

(56) Entgegenhaltungen:
- EP-A- 0 037 567
- DE-C- 570 307
- DE-C- 673 556
- FR-A- 695 031
- FR-A- 2 510 163
- GB-A- 2 124 318
- US-A- 1 653 598

## Beschreibung

Die Erfindung betrifft ein Verbundelement zum Einsatz als Verbindung zwischen einem Holzbalken bzw. -träger aufweisenden Tragwerk und einer Ortbetonplatte, wobei ein mit einem Gewinde versehener Abschnitt des Verbundelementes in die Holzbalken bzw. -träger einschraubbar und der Kopfbereich des Verbundelementes als Armierungsteil zum Eingriff in die Ortbetonplatte ausgebildet ist.

Wenn bisher von Verbunddecken gesprochen wird, so wird in der Regel davon ausgegangen, daß auf einem Stahlträger Bolzen aufgeschweißt sind, die in einen darüber angeordneten Betonträger eingreifen. Solche Stahlbetonverbundträger oder -decken sind in der Regel nur für Neubauten und auch nur dort anwendbar, wo das Gewicht praktisch keine besondere Rolle spielt.

Wenn früher z.B. ganze Altstadtquartiere abgebrochen werden und Neubauten weichen mußten, so ist man heute aus orts- und städteplanerischer Überlegung, nicht zuletzt aber auch im Zuge der "Nostalgie" darauf zurückgekommen, Altbauten zu sanieren und den heutigen Wohnverhältnissen anzupassen. Dabei beschränkt man sich nicht nur auf einzelne erhaltenswerte Bauten, sondern versucht vielmehr, ganze Wohnquartiere und alte Dorfteile zu erhalten.

Dies bedeutet für den Baufachmann neben den statisch-konstruktiven Problemen, die eine Altbausanierung mit sich bringt, auch der Schall- und Wärmeisolation größte Aufmerksamkeit zu schenken. Ferner müssen sich die Umbaukosten für den Bauherrn in einem finanziell tragbaren Rahmen halten.

Gerade bei den Gebäudedecken ergaben sich bei solchen Altbauten große Probleme bei Renovierungsarbeiten. Es wurden daher diese Zwischendecken in der Regel herausgebrochen, was die Kosten für die Renovierungsarbeiten beträchtlich erhöhte. Auf Stahlstützen wurde dann die neue Decke verlegt, was tiefe Eingriffe am Objekt notwendig machte. Es ist dadurch u.a. auch wertvolles Kulturgut, wie z.B. Stukkaturdecken, verloren gegangen. Wenn z.B. bei einer solchen Renovierung der Wärme- und Schallisolation Rechnung zu tragen ist und auch die Möglichkeiten ausgeschöpft werden sollen, die elektrischen und sanitären Installationen unter Putz zu erstellen, wurde bisher normalerweise eine Eisenbetonlösung vorgeschlagen. Dies hat aber zu einem Abbruch der noch sehr gut erhaltenen Holzbalkenkonstruktion bei den Decken sowie zu einer teuren Verstärkung der Wände und Fundamente geführt.

Es ist bereits bekannt geworden, zur Herstellung von Holz-Beton-Verbunddecken Nägel einzusetzen (EP-A-00 37 567). Diese Nägel werden in die bestehenden Holzbalken eingetrieben, wobei der frei überstehende Bereich der Nägel mit den Nägelköpfen in die Betonschicht eingreift. Einerseits muß hier darauf geachtet werden, daß die Nägel immer gleich tief in die Holzbalken eingetrieben werden, damit sie auch immer um ein entsprechendes Maß über die Oberfläche der Holzbalken vorstehen. Die Auszugswerte von Nägeln sind aber gegenüber denjenigen von Schrauben niedriger.

Es ist aber auch schon vorgeschlagen worden, zur Verstärkung von Holzdecken eine Leichtbetonschicht aufzutragen (DE-C-570 307), wobei als Verbundelement zur Aufnahme der entstehenden Schubkräfte zwischen der Holzdecke und der Betonschicht Holzschrauben eingesetzt wurden, welche zu einem Teil in die Holzbalken eingeschraubt worden sind, so daß der frei herausragende Teil solcher Schrauben mit dem Schraubenkopf in die Leichtbetonschicht eingreifen konnte. Dadurch wurde praktisch eine Holz-Beton-Verbunddecke geschaffen, was zu einer verbesserten Trittschall- und einer guten Luftschall- und Wärmeisolation führt. Die Zwischendecken in Gebäuden müssen also nicht mehr herausgerissen werden, sondern die vorhandenen Balken und Holzböden können in die Konstruktion miteinbezogen werden. Es können dadurch vor dem Aufbringen der Betonschicht die elektrischen und sanitären Installationen auf die Böden verlegt werden.

In solchen Verbunddecken sollen von den Holzteilen die Zugkräfte übernommen werden, wohingegen die Betonschicht die Druckkräfte übernehmen soll. Die zwischen den beiden Verbundteilen entstehenden Schubkräfte werden durch die eingesetzten Holzschrauben aufgenommen.

Die vorliegende Erfindung hat sich nun zur Aufgabe gestellt, ein Verbundelement der eingangs genannten Art zu schaffen, welches optimale Möglichkeiten für diesen speziellen Einsatzzweck mit sich bringt.

Zur Lösung dieser Aufgabe wird vorgeschlagen, daß an dem zum Eingriff eines Drehwerkzeuges ausgebildeten Kopf des Verbundelementes schaftseitig ein den Kopf radial überragender, umlaufender Bund ausgebildet ist, daß mit Abstand vom Kopf am Schaft des Verbundelementes ein Flansch angeordnet ist, wobei Bund und Flansch zumindest annähernd die gleichen Außenabmessungen aufweisen, und daß zumindest der bezüglich des Flansches dem Kopf abgewandte Abschnitt des Schaftes mit einem wenigstens über einen Teil der Länge dieses Abschnittes geführten Gewinde zum Eindrehen des Verbundelementes in einen Holzbalken bzw. -träger ausgebildet ist.

Durch den am Kopf des Verbundelementes ausgebildeten Bund ergibt sich eine wesentlich verbesserte Verankerung in dem auf die Holzkonstruktion aufgetragenen Beton, so daß auch die zwischen den beiden Verbundschichten zusätzlich zu den Schubkräften entstehenden Zugkräfte, welche in Achsrichtung der Verbundelemente wirken, optimal übertragen werden können. Es können also praktisch den Auszugswerten des Verbundelementes in bezug auf den Holzbalken bzw. -träger gleichwertige Auszugswerte in der Verankerung im Beton gegenübergestellt werden.

Eine wesentliche Verbesserung bedeutet die zusätzliche Anordnung eines Flansches am Schaft des Verbundelementes, und zwar mit dem entsprechenden Abstand vom Kopf des Verbundelementes. Durch diesen zusätzlichen Flansch wird die auf den Holzbalken bzw. -träger aufgesetzte Holzschalung bzw. der Holzboden fest an die Holzbalken bzw. -träger angepreßt, so daß sich eine wesentliche Verbesserung der Übertragung von Schubkräften ergibt, da allein schon die Holzkonstruktion für sich vorerst zu einem Verbundträger wird, bis die Betonschicht aufgebracht ist.

Vor dem Betoniervorgang wird auf die Holzdecke eine Plastikfolie aufgebracht, um dadurch während des Betoniervorganges das Eindringen von Feuchtigkeit in die Holzkonstruktion zu vermeiden. Durch die Anordnung des zusätzlichen Flansches am Schaft des Verbundelementes wird die infolge des Eindrehens des Verbundelementes in den Holzbalken bzw. -träger entstandene Öffnung wiederum zur Gänze abgedichtet, da die Plastikfolie jeweils im ganzen, die Öffnung umgebenden Bereich durch den Flansch gegen die Holzschalung bzw. den Holzboden angepreßt wird.

Durch den beim Einschrauben fest auf die Holzkonstruktion aufgepreßten Flansch ergibt sich ferner eine gewisse Verspannung des Verbundelementes in der Holzkonstruktion, so daß das Verbundelement praktisch fest in die Holzkonstruktion eingespannt ist, bevor der Ortbeton aufgebracht wird.

Es ist bereits eine Schraube mit einem Kopf und einem mit Abstand vom Kopf am Schaft vorgesehenen Bund bekannt geworden (FR-A-695 031), wobei dieser Bund lediglich als Tiefenbegrenzung beim Eindrehen in einen Untergrund wirkt und der Kopf dieser Schraube beispielsweise zum Anhängen von entsprechenden Teilen dient, zumal dieser Kopf ja über die Oberfläche des Gegenstandes vorsteht, in welchen die Schraube eingedreht worden ist.

Durch die Maßnahme, daß Bund und Flansch zumindest annähernd die gleichen Außenabmessungen aufweisen, ergibt sich nicht nur ein Vorteil in fertigungstechnischer Hinsicht, sondern auch bei der Magazinierung solcher Verbundelemente in einem Setzgerät, so daß die parallele Ausrichtung der einzelnen Verbundelemente durch jeweils zwei am Schaft des nächstfolgenden Verbundelementes abgestützte Bereiche (Bund und Schaft) gewährleistet ist.

Vorteilhaft im Hinblick auf die Herstellung und auch bezüglich der Festigkeit eines Verbundelementes wirkt sich aus, wenn der Flansch einstückig am Schaft angeformt ist. Durch ein Mehrstufenumformverfahren kann also ein einstückiges Verbundelement geschaffen werden, wobei durch diese Umformtechnik gerade im Bereich des am Schaft angeformten Flansches eine besondere Festigkeit erzielt wird.

Aus Fertigungsgründen und natürlich auch aus Gründen der einfachen Magazinierung ist es zweckmäßig, wenn Bund und Flansch als zylindrische Abschnitte gleichen Durchmessers ausgeführt sind. Dabei ist es vorteilhaft, wenn Bund und Flansch in Achsrichtung des Verbundelementes gemessen die gleiche Dicke aufweisen. Es ergeben sich daher im Bereich des Bundes und im Bereich des Flansches ähnlich große Materialanhäufungen, was sich in der Fertigungstechnik beim Umformen positiv auswirkt.

Ferner wird vorgeschlagen, daß der Durchmesser von Bund und Flansch zumindest annähernd dem doppelten Schaftdurchmesser entspricht. Es ergibt sich dadurch einerseits eine optimale Verankerung des Verbundelementes im Bereich des Kopfes, welcher in die Betonschicht hineinragt, und andererseits ist eine ordnungsgemäße Abstützung und Anpressung der Holzkonstruktion und auf dieser für die Plastikfolie gewährleistet.

Eine vorteilhafte Maßnahme liegt ferner darin, daß der Durchmesser des Schaftes im Bereich zwischen Bund und Flansch zumindest annähernd dem Außendurchmesser des Gewindebereiches am Schaft entspricht. Dies bringt wesentliche Vorteile bei der Fertigung eines solchen Verbundelementes mit sich, und außerdem ist die Gewähr gegeben, daß gerade bei Biegebelastungen auf das Verbundelement ein durchgehend annähernd gleicher Querschnitt des Verbundelementes vorliegt.

Da, wie Versuche gezeigt haben, der Kopf des Verbundelementes zusammen mit dem Bund eine ausreichende Verankerung der Betonplatte gegenüber der Holzkonstruktion mit sich bringt, bedarf es keiner zusätzlichen Bearbeitung des zwischen Bund und Flansch liegenden Schaftbereiches.

Eine weitere vorteilhafte Maßnahme liegt darin, daß das Gewinde auf dem Schaft nach Art eines Blechschraubengewindes ausgeführt ist und das Verhältnis von Kerndurchmesser zu Außendurchmesser annähernd 1 : 1,2 bis 1 : 1,6 beträgt. Es hat sich gezeigt, daß das Verbundelement mit einer solchen Gewindeform ohne Vorbohren eines Loches direkt in die Holzkonstruktion eingedreht werden kann, wobei außerdem die eingesetzten Schraubgeräte keinesfalls überlastet werden können. Durch die besondere Wahl des Verhältnisses von Kerndurchmesser und Außendurchmesser des Schraubengewindes ist ein optimaler Eingriff zwischen Verbundelement und Holzbalken bzw. -träger gewährleistet, wobei jedoch die bei Holz gefürchtete Spaltwirkung vermieden wird.

Im Rahmen der Erfindung ist es aber auch möglich, daß das Gewinde auf dem Schaft nach Art eines Holzschrauben-, Spanplatten- oder Blechgewindes mit möglichst großem Verhältnis von Kerndurchmesser zu Außendurchmesser ausgeführt ist. Die Ausreißwerte liegen bei einem solchen Gewinde noch wesentlich höher.

Damit ein Spalten der Holzbalken mit Sicherheit ausgeschlossen werden kann, ist es vorteilhaft, wenn das freie Ende des Schaftes als Bohrspitze oder angefräste Spitze ausgebildet ist.

Ein weiterer Vorschlag geht dahin, daß der axiale Abstand zwischen Bund und Flansch annähernd ein Drittel der gesamten Länge des Verbundelementes beträgt. Für eine ausreichend feste Verbundkonstruktion ist es eben vorteilhaft, wenn das Verbundelement zu zwei Dritteln seiner Länge in die Holzkonstruktion eingreift und annähernd zu einem Drittel seiner Länge in die Ortbetonplatte.

Ein vorteilhaftes Merkmal ist ferner dadurch gegeben, daß am Übergangsbereich zwischen Schaft und Flansch ein sich zum Flansch hin konisch erweiternder Ansatz vorgesehen ist, wobei dieser Übergangsbereich im Querschnitt gesehen vorzugsweise bogenförmig verläuft. Dadurch besteht die Möglichkeit, daß der Randbereich der Einschrauböffnung in der Holzkonstruktion beim Anziehen des Verbundelementes sozusagen eine angepreßte Ansenkung erhält, wobei in diesem Bereich außerdem die auf die Holzkonstruktion aufgelegte Plastikfolie zusätzlich angepreßt wird. Gerade mit einem bogenförmigen Verlauf des Übergangsbereiches kann der Randbereich der Einschrauböffnung optimal angepreßt und die Plastikfolie zusätzlich gehalten werden.

Ein weitere Verbesserung der Dichtwirkung durch Anpressung der Plastikfolie kann dann erreicht werden, wenn der Flansch an seiner gewindeseitigen Begrenzungsfläche an dessen Außenrandbereich einen koaxial zum Schaft ausgerichteten, vorstehenden Ringabschnitt aufweist.

Da das erfindungsgemäße Verbundelement in einen Holzbalken bzw. -träger eingeschraubt werden soll, ergibt sich eine wesentliche Verringerung des Eindrehmomentes, wenn zumindest der Gewindebereich des Verbundelementes mit einer Wachsbeschichtung oder einer anderen, die Reibung beim Eindrehen mindernden Beschichtung versehen ist.

Weitere erfindungsgemäße Merkmale und besondere Vorteile werden in der nachstehenden Beschreibung anhand der Zeichnungen noch näher erläutert. Es zeigen:
- Fig. 1: eine Ansicht eines erfindungsgemäßen Verbundelementes;
- Fig. 2: einen Schnitt durch eine Verbundkonstruktion mit eingesetztem Verbundelement;
- Fig. 3: einen Schnitt durch eine Gebäudedecke, wobei lediglich die gesamte Holzkonstruktion mit Unterdecke dargestellt ist;
- Fig. 4: einen Schnitt durch eine Deckenkonstruktion gemäß Fig. 3, wobei jedoch noch der alte Fußbodenbelag aufgelegt ist;
- Fig. 5: die Deckenkonstruktion nach Fig. 4 mit eingesetzten Verbundelementen und aufgebrachter Ortbetonplatte;
- Fig. 6: einen Schnitt durch eine Deckenkonstruktion, bei welcher der zwischen den Schräg- oder Blindböden und der Ortbetonplatte verbleibende Raum zusätzlich mit einem Füllmaterial angefüllt ist;
- Fig. 7: einen Schnitt durch eine Deckenkonstruktion ähnlich wie Fig. 5, wobei jedoch hier die Holzbalken an der Deckenuntersicht sichtbar bleiben.

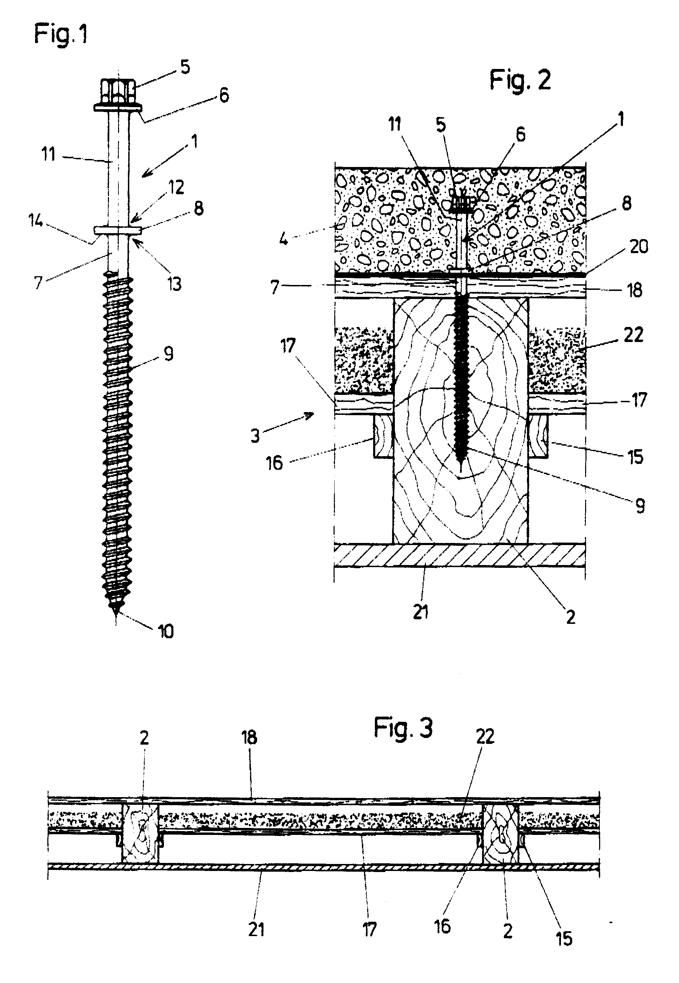

Das in Fig. 1 dargestellte Verbundelement 1 dient zum Einsatz als Verbindung zwischen einem Holzbalken 2 aufweisenden Tragwerk 3 und einer Ortbetonplatte 4. Das Verbundelement 1 besteht im wesentlichen aus einem Kopf 5, einem Bund 6, einem Schaft 7, einem Flansch 8 und einem Gewinde 9 mit einer Eindrehspitze 10. Der Kopf 5 ist zum Eingriff eines Drehwerkzeuges ausgebildet, wobei auf der Zeichnung ein Außenantrieb dargestellt ist. Es wäre aber durchaus denkbar, einen Innenantrieb am Kopf 5 vorzusehen. An den Kopf 5 schließt schaftseitig der den Kopf 5 radial überragende, umlaufende Bund 6 an. Der Flansch 8 ist mit Abstand vom Kopf 5 und somit auch vom Bund 6 am Schaft 7 angeordnet. Der Bund 6 und der Flansch 8 weisen zweckmäßig zumindest annähernd die gleichen Außenabmessungen auf. Das Gewinde 9 ist an dem bezüglich des Flansches 8 dem Kopf 5 abgewandten Abschnitt des Schaftes 7 vorgesehen und dient zum Eindrehen des Verbundelementes in den Holzbalken 2.

Es wäre denkbar, das Verbundelement 1 zweistückig auszubilden, d.h. aus einem Schaft 7, dessen oberes Ende mit dem Flansch 8 abschließt. An diesen Abschnitt könnte dann ein mit dem Kopf 5 versehener Schaftabschnitt 11 z.B. durch Schweißung verbunden werden. Möglich wäre es auch, auf ein ansonsten einstückiges Verbundelement 1 einen ringförmigen Teil aufzuschweißen, welcher dann den Flansch 8 bildet.

Aus Fertigungsgründen und auch im Hinblick auf eine besondere Festigkeit ist es jedoch vorteilhaft, wenn der Flansch 8 einstückig am Schaft 7 angeformt ist.

Sowohl der Bund 6 als auch der Flansch 8 sind als zylindrische Abschnitte gleichen Durchmessers ausgeführt und weisen außerdem in Achsrichtung des Verbundelementes 1 gesehen zweckmäßig die gleiche Dicke auf.

Der Durchmesser des Bundes 6 und des Flansches 8 entspricht zumindest annähernd dem doppelten Schaftdurchmesser. Der Durchmesser des Schaftes 7 im Bereich zwischen Bund 6 und Flansch 8 entspricht zumindest annähernd dem Außendurchmesser des Gewindes 9 am Schaft 7. Der Schaftabschnitt 11 im Bereich zwischen Bund 6 und Flansch 8 ist zweckmäßig gewindefrei ausgeführt. Es wäre durchaus denkbar, diesen Schaftbereich 11 gerillt auszuführen, wobei dies jedoch in bezug auf die ordnungsgemäße, gegenseitige Befestigung der Verbundteile nicht notwendig ist. Außerdem würde dadurch bei Knickbelastungen eine Querschnittsschwächung hervorgerufen.

Das Gewinde 9 kann z.B. als Holzschraubengewinde ausgeführt werden. Bei einem Holzschrauben-, Spanplatten- oder Blechgewinde kann das Verhältnis zwischen Kerndurchmesser und Außendurchmesser relativ groß gewählt werden, so daß die Ausreißwerte sehr hoch liegen. Gerade bei entsprechendem Durchmesser des Verbundelementes ist es aber unter Umständen zweckmäßig, am freien Ende des Gewindeschaftes eine Bohrspitze oder eine angefräste Spitze vorzusehen. Die Spaltgefahr des Holzbalkens wird dadurch ausgeschaltet. Vorteilhaft ist das Gewinde 9 nach Art eines Blechschraubengewindes ausgeführt, wobei dann das Verhältnis von Kerndurchmesser zu Außendurchmesser annähernd 1 : 1,2 bis 1 : 1,6 beträgt. Eine solche Ausführungsform des Gewindes für das erfindungsgemäße Verbundelement sieht einen Kerndurchmesser von 5,15 mm und einen Gewindeaußendurchmesser von 6,5 mm vor. Die Gewindesteigung beträgt 2,54 mm. Mit einer solchen Ausführung des Gewindes am Verbundelement 1 können trotz relativ kleinem Verhältnis zwischen Kern- und Außendurchmesser ausgezeichnete Ausreißwerte erzielt werden, und außerdem ist die Gewähr gegeben, daß beim Eindrehen des Verbundelementes weder ein Vorbohren notwendig ist noch eine Spaltgefahr für den Holzbalken 2 besteht. Je nach Einsatzzweck der Verbundelemente könnte der Schaft auch mit einem größeren Durchmesser ausgebildet werden, wobei dann der Durchmesser des Bundes und des Schaftes nicht zwangsweise ebenfalls doppelt so groß sein müßte.

Für eine ausreichende Verankerung des Verbundelementes 1 sowohl im Holzbalken 2 als auch in der Ortbetonplatte 4 beträgt der axiale Abstand zwischen Bund 6 und Flansch 8 annähernd ein Drittel der gesamten Länge des Verbundelementes 1.

An den Übergangsbereichen 12 und 13 zwischen Schaft 7 bzw. Schaftabschnitt 11 und dem Flansch 8 ist ein im Querschnitt bogenförmiger Verlauf vorgesehen. Es wäre auch denkbar, am Übergangsbereich 12 bzw. 13 zwischen Schaft 7 und Flansch 8 einen sich zum Flansch 8 hin konisch erweiternden Ansatz vorzusehen.

Der Flansch 8 könnte eine besondere Ausbildung aufweisen, und zwar könnte dieser an seiner gewindeseitigen Begrenzungsfläche 14 an dessen Außenrandbereich einen koaxial zum Schaft ausgerichteten, vorstehenden Ringabschnitt aufweisen. Es wäre dadurch gerade am Außenrandbereich des Flansches 8 ein besonderer Anpreßdruck gegen die Oberseite der Holzkonstruktion möglich.

Das Gesamt-Verbundelement kann einer Oberflächenbehandlung unterzogen werden. So wäre eine verzinkte Ausführung möglich oder aber nur eine geschwärzte Ausgestaltung. Gerade im Hinblick auf das Eindrehen des Verbundelementes in Holz ist es zweckmäßig, wenn zumindest der Gewindebereich des Verbundelementes 1 mit einer Wachsbeschichtung oder einer anderen, die Reibung beim Eindrehen mindernden Beschichtung versehen ist.

Wie bei anderen Befestigern wäre es auch beim erfindungsgemäßen Verbundelement möglich, dieses aus rostfreiem Material zu fertigen. Da das Verbundelement jedoch bei dieser speziellen Anwendungsart weder der Witterung noch der Atmosphäre ausgesetzt ist, kann hier auf eine solche Ausführung verzichtet werden.

Die erfindungsgemäßen Verbundelemente 1 werden zweckmäßig mit einem Schrauber oder einem speziellen Setzgerät in die Holzbalken 2 eingedreht, wobei der Bund 6 und der Flansch 8 im Zusammenwirken mit einer Schraubernuß für eine ordnungsgemäße Führung in einem Schrauberkanal herangezogen werden können. Es ist dann zweckmäßig, wenn der Durchmesser von Bund 6 und Flansch 8 zumindest annähernd dem Außendurchmesser einer am Kopf 5 ansetzbaren Schraubernuß entspricht.

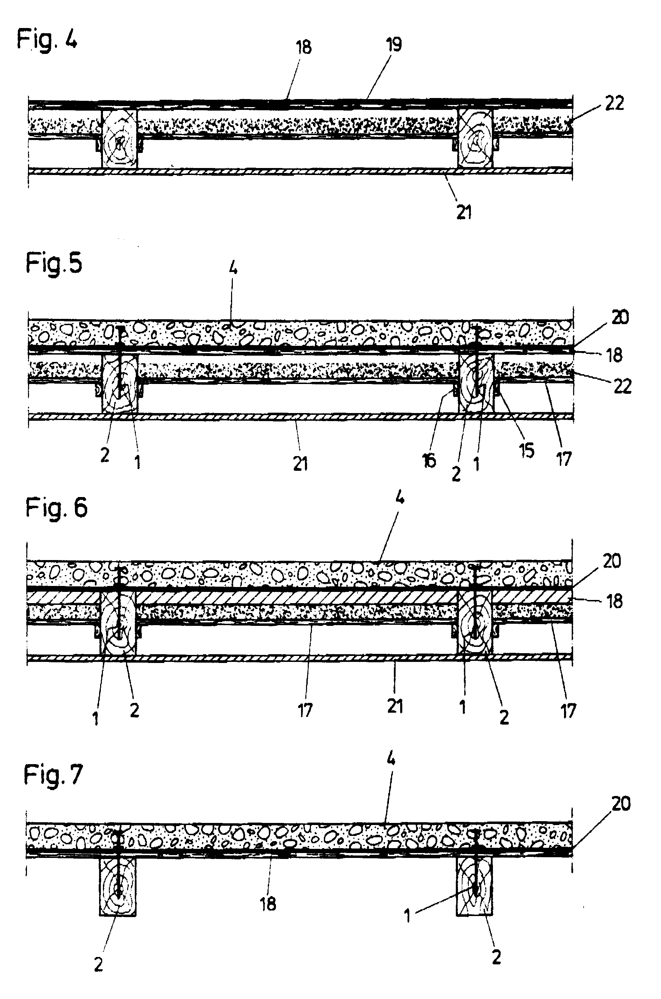

Aus Fig. 2 ist der Aufbau einer Altbaudecke ersichtlich, wobei in diesem Zusammenhang auch auf die Fig. 3 und 4 verwiesen wird. In entsprechendem Abstand voneinander sind parallel zueinander ausgerichtet Holzbalken 2 von Wand zu Wand verlaufend angeordnet. An den Seitenwandungen der Holzbalken 2 sind Latten 15 und 16 befestigt, auf welchen Schräg- oder Blindböden 17 aufgesetzt sind. Auf die Schräg- oder Blindböden 17 wurden früher zwischen den einzelnen Holzbalken 2 Sand- oder Schlackefüllungen eingebracht, und auf den Holzbalken 2 lagen die Bodenbretter 18 auf und wurden mit diesen z.B. mittels Nägeln oder Schrauben befestigt.

Es muß nun auf jeden Fall der in Fig. 4 gezeigte, alte Bodenbelag 19 entfernt werden. Mit Sondieröffnungen können dann Lage, Abmessungen und Zustand der Holzbalken 2 festgestellt werden. Insbesondere der Zustand der Auflager an den Außenwänden wird sorgfältig überprüft. Nun wird die Bretterlage 18 mit einer Plastikfolie 20 abgedeckt, um dadurch eine Abdichtung gegen die gesamte Holzkonstruktion zu erreichen. Durch das Aufbringen von Ortbeton gibt es eine entsprechende Menge Feuchtigkeit bzw. Flüssigkeit, welche ansonsten in die Holzkonstruktion eindringen würde. Nun werden ohne Vorbohren die Verbundelemente 1 durch die Plastikfolie 20 und die Bretterlage 18 hindurch in den Holzbalken 2 eingedreht. Das spezielle Gewinde am Verbundelement sorgt für hohe Zug- und Schubwiderstände der Verbundelemente und damit für eine hohe Traglast des ganzen Systems. Je nach Spannweite der Holzbalken 2, nach Abstand der aufeinander folgenden Holzbalken 2 und nach dem baulichen Zustand derselben müssen mehr oder weniger Verbundelemente gesetzt werden, wobei dies einer exakten Berechnung bedarf. Die Anordnung der Verbundelemente ist über die ganze Länge eines Holzbalkens 2 nicht gleichmäßig verteilt, da sich an den Randbereichen bezogen auf die Länge des Holzbalkens 2 ganz andere Belastungen als im Mittelbereich bezogen auf die Länge des Holzbalkens 2 ergeben. Es ist daher notwendig, die Verbundelemente entsprechend den Vorschriften der durchgeführten Berechnungen auf die Länge eines Holzbalkens aufzuteilen und zu setzen.

Beim Eindrehen der Verbundelemente 1 wird nicht nur die Bretterlage 18 gegen die Oberseite der Holzbalken 2 angepreßt, sondern es wird zusätzlich die auf die Bretterlage 18 aufgelegte Plastikfolie 20 durch den Flansch 8 fest an die Oberseite der Bretterlage 18 gedrückt, so daß trotz der beim Eindrehen des Verbundelementes gebildeten Öffnung eine ausreichende Abdichtung gewährleistet ist. Nun kann die Ortbetonplatte 4 gefertigt werden. Zweckmäßig wird Normalbeton mit einem Größtkorn von 8 mm eingesetzt. Leichtbeton hat in der Regel einen zu geringen E-Modul. Die Stärke der Ortbetonplatte 4 beträgt normalerweise 8 cm. 6 cm sollte an sich nicht unterschritten werden. Für sehr hohe Anforderungen an den Schallschutz und die Tragfähigkeit sind Plattenstärken von 10 - 12 cm möglich. Je nach Aufbau der Decke und des geforderten Schallschutzes kann noch ein schwimmender Estrich eingebaut werden. Allenfalls genügt auch ein auf die Ortbetonplatte 4 aufgelegter Teppich mit dem erforderlichen Verbesserungsmaß.

Besonders vorteilhaft wirkt sich aus, daß eine an der Unterseite der Holzbalken 2 befestigte Decke 21, z.B. eine Gipsdecke, für diesen Verstärkungsvorgang der gesamten Deckenkonstruktion nicht entfernt werden muß. Die in die Deckenkonstruktion eingefüllte Sand- oder Schlackefüllung 22 kann in der Deckenkonstruktion verbleiben.

In Fig. 6 ist ein Ausführungsbeispiel gezeigt, bei welchem die in Fig. 2 gezeigte Bretterlage 18, also der ursprüngliche Fußboden, entfernt worden ist. Dies ist z.B. dann notwendig, wenn die Höhenverhältnisse in einem zu sanierenden Raum knapp sind, so daß es also auf jeden Zentimeter Raumhöhe ankommt. Es wird dann über dem Schräg- oder Blindboden 17 ein Leichtbaustoff oder ein unbrennbarer Dämmstoff 23 mit genügender Steifigkeit aufgelegt. Auf dem Schräg- oder Blindboden 17 liegender Schutt, Sand oder Schlacke 22 kann entfernt oder auch belassen werden.

Eine Ausführung nach Fig. 7 wird in der Regel bei einem Bauvorgang bei einem Neubau eingesetzt, ist aber in gleicher Weise auch für die Altbausanierung anwendbar. Hier liegen die Holzbalken 2 frei unterhalb einer Holzverschalung 18. Auf diese Holzverschalung 18 wird wiederum die Plastikfolie 20 aufgelegt, worauf nach dem Eindrehen der Verbundelemente 1 die Ortbetonplatte 4 aufgebracht wird.

In der vorstehenden Beschreibung wurde stets von einem Holzbalken 2 gesprochen. Es können natürlich auch, insbesondere bei Neubauten, Holzträger der verschiedensten Ausführungsformen eingesetzt werden. So wäre es denkbar, eine entsprechende Verbundkonstruktion mit Leimbindern herzustellen. Es ist also auch möglich, das erfindungsgemäße Verbundelement bei Deckenkonstruktionen im Hallenbau einzusetzen, wo relativ große Spannweiten durch Leimbinder überbrückt werden.

Das erfindungsgemäße Verbundelement ist daher nicht nur bei der Altbausanierung einsetzbar, sondern auch bei Neubauten jeder Art. In der vorstehenden Beschreibung wurde anhand von Beispielen die Erläuterung durchgeführt, welche sich auf die Deckenkonstruktionen, also auf Geschoßdecken, bezieht. Das erfindungsgemäße Verbundelement ist auch im Wandbereich einsetzbar, wo also mit einem aus Holz bestehenden Wandkonstruktionsteil eine Ortbetonplatte aus Normal- oder Leichtbeton in einem Verbund verankert werden soll.

Ein weiteres Einsatzgebiet des erfindungsgemäßen Verbundelementes liegt z.B. auch beim Brückenbau, und zwar insbesondere dort, wo alte Holzbrücken saniert werden sollen. Es könnte hier die Tragfähigkeit alter Holzbrücken verbessert werden, und es würden daher Entscheidungen zur Erhaltung alter Holzbrücken leichter fallen, wenn diese in einfacher und sicherer Weise durch entsprechende Verstärkung mittels aufgebrachter Ortbetonschichten saniert werden könnten.

Bei einer Verbundkonstruktion mit dem erfindungsgemäßen Verbundelement ergeben sich neben Einsparungen bei Abbrucharbeiten auch Einsparungen an Schalung und Armierung, welche beim Ersatz einer Holzbalkendecke durch eine komplette Betondecke erforderlich wären. Eine Holz-Beton-Verbunddecke ist wesentlich steifer und tragfähiger als die ursprüngliche Holzbalkendecke. Sie hat auch im Vergleich mit dieser einen wesentlich verbesserten Feuerwiderstand. Das kritische Element in einer Holz-Beton-Verbundkonstruktion war bisher das Verbundelement zwischen Holz und Beton. Durch den Einsatz des in besonderer Weise ausgeführten, erfindungsgemäßen Verbundelementes können die Vorteile einer Holz-Beton-Verbundkonstruktion bezüglich hoher Tragfähigkeit, geringer Durchbiegung und geringen Spannungen im Holz und im Beton voll ausgenützt werden.

## Patentansprüche

1. Verbundelement zum Einsatz als Verbindung zwischen einem Holzbalken bzw. -träger aufweisenden Tragwerk und einer Ortbetonplatte, wobei ein mit einem Gewinde versehener Abschnitt des Verbundelementes in die Holzbalken bzw. -träger einschraubbar und der Kopfbereich des Verbundelementes als Armierungsteil zum Eingriff in die Ortbetonplatte ausgebildet ist, **dadurch gekennzeichnet,** daß an dem zum Eingriff eines Drehwerkzeuges ausgebildeten Kopf (5) des Verbundelementes (1) schaftseitig ein den Kopf (5) radial überragender, umlaufender Bund (6) ausgebildet ist, daß mit Abstand vom Kopf (5) am Schaft (7) des Verbundelementes (1) ein Flansch (8) angeordnet ist, wobei Bund (6) und Flansch (8) zumindest annähernd die gleichen Außenabmessungen aufweisen, und daß zumindest der bezüglich des Flansches (8) dem Kopf (5) abgewandte Abschnitt des Schaftes (7) mit einem wenigstens über einen Teil der Länge dieses Abschnittes geführten Gewinde (9) zum Eindrehen des Verbundelementes (1) in einen Holzbalken (2) bzw. -träger ausgebildet ist.

2. Verbundelement nach Anspruch 1, dadurch gekennzeichnet, daß der Flansch (8) einstückig am Schaft (7) angeformt ist.

3. Verbundelement nach den Ansprüchen 1 und/oder 2, dadurch gekennzeichnet, daß Bund (6) und Flansch (8) als zylindrische Abschnitte gleichen Durchmessers ausgeführt sind.

4. Verbundelement nach einem der Ansprüche 1 bis 3, dadurch gekennzeichnet, daß Bund (6) und Flansch (8) in Achsrichtung des Verbundelementes (1) gemessen die gleiche Dicke aufweisen.

5. Verbundelement nach Anspruch 1 und einem der Ansprüche 2 bis 4, dadurch gekennzeichnet, daß der Durchmesser von Bund (6) und Flansch (8) zumindest annähernd dem doppelten Schaftdurchmesser entspricht.

6. Verbundelement nach Anspruch 1 und einem der vorhergehenden Ansprüche, dadurch gekennzeichnet, daß der Durchmesser des Schaftes (7) im Bereich (11) zwischen Bund (6) und Flansch (8) zumindest annähernd dem Außendurchmesser des Gewindebereiches am Schaft (7) entspricht.

7. Verbundelement nach wenigstens einem der Ansprüche 1 bis 6, dadurch gekennzeichnet, daß das Gewinde (9) auf dem Schaft (7) nach Art eines Blechschraubengewindes ausgeführt ist und das Verhältnis Von Kerndurchmesser zu Außendurchmesser annähernd 1 : 1,2 bis 1 : 1,6 beträgt.

8. Verbundelement nach wenigstens einem der Ansprüche 1 bis 6, dadurch gekennzeichnet, daß das Gewinde (9) auf dem Schaft (7) nach Art eines Holzschrauben-, Spanplatten- oder Blechgewindes mit möglichst großem Verhältnis von Kerndurchmesser zu Außendurchmesser ausgeführt ist.

9. Verbundelement nach Anspruch 1 und einem der vorhergehenden Ansprüche, dadurch gekennzeichnet, daß das freie Ende des Schaftes (7) als Bohrspitze oder angefräste Spitze ausgebildet ist.

10. Verbundelement nach wenigstens einem der Ansprüche 1 bis 6, dadurch gekennzeichnet, daß der axiale Abstand zwischen Bund (6) und Flansch (8) annähernd ein Drittel der gesamten Länge des Verbundelementes (1) beträgt.

11. Verbundelement nach Anspruch 1 und einem der vorhergehenden Ansprüche, dadurch gekennzeichnet, daß am Übergangsbereich (12, 13) zwischen Schaft (7) und Flansch (8) ein sich zum Flansch (8) hin konisch erweiternder Ansatz vorgesehen ist, wobei dieser Übergangsbereich (12, 13) im Querschnitt gesehen vorzugsweise bogenförmig verläuft.

12. Verbundelement nach Anspruch 1 und einem der vorhergehenden Ansprüche, dadurch gekennzeichnet, daß der Flansch (8) an seiner gewindeseitigen Begrenzungsfläche (14) an dessen Außenrandbereich einen koaxial zum Schaft (7) ausgerichteten, vorstehenden Ringabschnitt aufweist.

13. Verbundelement nach Anspruch 1 und einem der vorhergehenden Ansprüche, dadurch gekennzeichnet, daß zumindest der Gewindebereich des Verbundelementes (1) mit einer Wachsbeschichtung oder einer anderen, die Reibung beim Eindrehen mindernden Beschichtung versehen ist.

## Claims

1. A connecting element for use as a connection between a framework having timber beams or joists and a cast-in-situ slab, wherein a portion of the connecting element provided with a screw-thread can be screwed into the timber beams or joists and the head region of the connecting element is designed as a reinforcing part for engagement in the cast-in-situ slab, characterised in that an annular collar (6) projecting radially from the head (5) on the shank side is formed on the head (5) of the connecting element (1) designed to be engaged by a rotary tool, in that a flange (8) is disposed at a distance from the head (5) on the shank (7) of the connecting element (1), wherein the collar (6) and the flange (8) have at least approximately the same outside dimensions, and in that at least the portion of the shank (7) remote from the head (5) in relation to the flange (8) is formed with a screw-thread (9) extending over at least part of the length of this portion and serving to screw the connecting element (1) into a timber beam (2) or joist.

2. A connecting element according to Claim 1, characterised in that the flange (8) is formed integrally with the shank (7).

3. A connecting element according to Claim 1 and/or 2, characterised in that the collar (6) and the flange (8) are formed as cylindrical portions of like diameter.

4. A connecting element according to any one of Claims 1 to 3, characterised in that the collar (6) and the flange (8) have the same thickness, measured in the axial direction of the connecting element (1).

5. A connecting element according to Claim 1 and any one of Claims 2 to 4, characterised in that the diameter of the collar (6) and the flange (8) corresponds at least approximately to double the shank diameter.

6. A connecting element according to Claim 1 and any one of the preceding Claims, characterised in that the diameter of the shank (7) in the region (11) between the collar (6) and the flange (8) corresponds at least approximately to the outer diameter of the threaded region on the shank (7).

7. A connecting element according to at least one of Claims 1 to 6, characterised in that the thread (9) on the shank (7) takes the form of a self-tapping screw-thread and the ratio of the root diameter to the outer diameter is approximately 1 : 1.2 to 1 : 1.6.

8. A connecting element according to at least one of Claims 1 to 6, characterised in that the thread (9) on the shank (7) takes the form of a wood-screw, chipboard or self-tapping thread with the largest possible ratio of root diameter to outer diameter.

9. A connecting element according to Claim 1 and any one of the preceding Claims, characterised in that the free end of the shank (7) is in the form of a drill tip or milled tip.

10. A connecting element according to at least one of Claims 1 to 6, characterised in that the axial distance between the collar (6) and the flange (8) is at least approximately one third of the entire length of the connecting element (1).

11. A connecting element according to Claim 1 and any one of the preceding Claims, characterized in that a projection widening conically towards the flange (8) is provided at the transition zone (12, 13) between the shank (7) and the flange (8), said transition zone (12, 13), viewed in cross-section, preferably extending arcuately.

12. A connecting element according to Claim 1 and any one of the preceding Claims, characterized in that on its boundary surface (14) on the thread side the flange (8) has in its outer peripheral zone a projecting annular portion aligned coaxially with the shank (7).

13. A connecting element according to Claim 1 and any one of the preceding Claims, characterised in that at least the threaded region of the connecting element (1) is provided with a wax coating or other coating reducing friction during the screwing-in procedure.

## Revendications

1. Elément d'assemblage à insérer comme liaison entre une poutre en bois ou une structure portante comportant une poutre en bois et une plaque de béton coulée sur place, élément dans lequel un segment muni de filetage de l'élément d'assemblage peut être vissé dans la poutre en bois ou dans la structure en bois et dans lequel la porte comportant la tête de l'élément de liaison est réalisée comme pièce d'armature pour l'engagement dans la plaque de béton, caractérisé
- en ce que sur la tête (5) de l'élément d'assemblage (1) préparée pour permettre l'intervention d'un outil de vissage est placé du côté de la tige un collet (6) circulaire, dépassant radialement de la tête (5),
- en ce que sur la tige (7) à une certaine distance de la tête (5) de l'élément d'assemblage (1) est disposée une collerette (8), et le collet (6) et la collerette (8) ont au moins approximativement les mêmes dimensions, et
- en ce qu'au moins le segment de la tige (7) éloigné de la collerette (8) est réalisé avec un filetage (9) établi sur une partie de la longueur de ce segment pour permettre l'insertion par vissage de l'élément d'assemblage (1) dans une poutre en bois (3) ou une structure portante en bois.

2. Elément d'assemblage selon la revendication 1, caractérisé en ce que la collerette (8) est formée d'une seule pièce avec la tige (7).

3. Elément d'assemblage selon les revendications 1 et/ou 2, caractérisé en ce collet (6) et collerette (8) sont réalisés comme des segments cylindriques de même diamètre.

4. Elément d'assemblage selon une des revendications 1 à 3, caractérisé en ce que collet (6) et collerette (8) ont la même épaisseur mesurée dans le sens de l'axe de l'élément d'assemblage (1).

5. Elément d'assemblage selon la revendication 1 et une des revendications 2 à 4, caractérisé en ce que le diamètre du collet (6) et celui de la collerette (8) correspondent au moins approximativement au double du diamètre de la tige.

6. Elément d'assemblage selon la revendication 1 et une des revendications précédentes, caractérisé en ce que le diamètre de la tige (7) dans la zone (11) entre collet (6) et collerette (8) correspond au moins approximativement au diamètre extérieur de la zone filetée sur la tige (7).

7. Elément d'assemblage selon au moins une des revendications 1 à 6, caractérisé en ce que le filetage (9) sur la tige (7) est réalisé à la manière d'un filetage de vis à tôle et le rapport entre le diamètre de l'âme et le diamètre extérieur est compris approximativement entre 1 : 1,2 et 1 : 1,6.

8. Elément d'assemblage selon au moins une des revendications 1 à 6, caractérisé en ce que le filetage (9) est réalisé sur la tige (7) à la manière d'un filetage de vis à bois, de panneaux d'agglomérés ou de filetage pour tôle avec le rapport le plus grand possible entre le diamètre de l'âme et le diamètre extérieur.

9. Elément d'assemblage selon la revendication 1 et une des revendications précédentes, caractérisé en ce que l'extrémité libre de la tige (7) est réalisée comme une pointe de perçage ou une pointe fraisée.

10. Elément d'assemblage selon au moins une des revendications 1 à 6, caractérisé en ce que la distance axiale entre collet (6) et collerette (8) est approximativement un tiers de la longueur totale de l'élément d'assemblage.

11. Elément d'assemblage selon la revendication 1 et une des revendications précédentes, caractérisé en ce que la zone de transition (12, 13) entre la tige (7) et collerette (8) est prévu un épaulement s'élargissant coniquement vers la collerette (8), cette zone de transition (12, 13) vue en section transversale se développant de préférence en forme d'arc.

12. Elément d'assemblage selon la revendication 1 et une des revendications précédentes, caractérisée en ce que la collerette (8) comporte sur sa surface de délimitation (14) du côté du filetage sur la zone de bord extérieure de celle-ci, un segment annulaire en saillie, dirigé coaxialement par rapport à la tige (7).

13. Elément d'assemblage selon la revendication 1 et une des revendications précédentes, caractérisé en ce qu'au moins la partie filetée de l'élément d'assemblage (1) est munie d'une couche de cire et d'un autre enduit réduisant le frottement lors de son insertion par vissage.
